# EUROPEAN PATENT SPECIFICATION

(11) **EP 0 515 092 B1**
(45) Date of publication and mention of the grant of the patent: **03.07.1996**
(21) Application number: 92304353.3
(22) Date of filing: 14.05.1992
(51) Int. Cl.: B29C 33/60, B29C 45/40, B29C 33/62

(54) **Amide Mould Release agents for Injection moulding of Methylmethacrylate polymers**
Amidische Entformungsmittel für Spritzgiessen von Methylmethacrylat Polymeren
Amides de démoulage pour la moulage par injection de polymères de méthacrylat de méthyle

(30) Priority: 21.05.1991 US 703444
(43) Date of publication of application: 25.11.1992
(73) Proprietor: ROHM AND HAAS COMPANY, Philadelphia Pennsylvania 19105 (US)
(72) Inventor: Cassidy, Robert Thomas, Yardly, Pennsylvania 19067 (US); Cholod, Michael Stefan, Bensalem, Pennslyvania 19020 (US)
(74) Representative: Angell, David Whilton

(56) References cited:
- EP-A- 0 095 274
- EP-A- 0 167 264
- US-A- 4 490 324
- PATENT ABSTRACTS OF JAPAN vol. 10, no. 142 (M-481)(2199) 24 May 1986
- 'ENCYCLOPEDIA OF POLYMER SCIENCE AND TECHNOLOGY ; PLASTICS, RESINS, RUBBER, FIBERS' 1968, INTERSCIENCE, NEW YORK, NY, USA volume 8, chapter Lubricants, pages 325-337

## Description

This invention is concerned with injection moulding and is directed to the problem of avoiding build-up of mould-release agent on die surfaces or having mould-release agent plating out on the surface of the moulded parts.

A substance that prevents or reduces adhesion of a material to itself or to another material is known as an abherent. Synonyms for abherents include release agents, parting agent, antiblocking agents, slip aids, and external lubricant. Many substances which are adherent under static conditions serve as lubricants under dynamic stress.

Abherents may be in the form of a dry powder (flour, talc), a dry film (polytetrafluoroethylene, hydrocarbon wax), or a wet film (silicone oil, peanut oil). Major industrial areas of applications include casting, moulding, surface release coating, transfer coatings, and packacking. Industries that rely on abherent include food, candy, foundry, rubber, polymer, glass, printing, furniture, packaging, pressure-sensitive tape, and transfer coatings. Increasing automation and the tremendous growth of polymer processing have led to widespread commercial use of abherents.

Release agents require chemical inertness towards at least one of the two materials whose adhesion is to be prevented. The service temperature range of mould-release agent is important. Low molecular weight agents tend to volatilize and some agents become oxidized or decompose at high temperatures to give surfaces with adhesive properties. Health and safety factors of the release agent system must be considered from the manufacturing and consumer standpoints. Toxicity and related safety factors must be addressed. The FDA clearance standard must be considered for any moulded products that may come into contact with food, drug or cosmetic products.

Release agents are in general applied to mould surfaces by standard coating methods and including spraying, dusting, dipping, powder coating etc. Such agents may also be incorporated as an additive into the polymeric materials used to manufacture moulded articles. The release agent must be chosen to be compatible or a least partially compatible with the polymeric materials. The release agent should not "bloom" or "exude" to cause adhesion on the mould surface or cause deterioration to the surface conditions of the injected moulded product.

Release agents are used in many industrial operations including casting, moulding and forming operations and over the years many different kinds of release materials such as silicones, waxes, metal salts of stearic acid, release papers, cellulose derivatives, some polyolefin materials and various other organic and inorganic materials have been used for various release purposes.

Fatty acid bis-amides, fatty acid alcohols and synthetic waxes based on alkylenediamines are known for their limited compatibility with polymeric materials such as polystyrene, polyethylene and poly(vinyl chloride) and therefore have been used as lubricants and release agents. Typically these amide release agents are lower alkyl amides, i.e. such as ethylene bis-stearamide. Films of the fatty acid amides are deposited from a variety of formulations used as mould-release agent. A solution of the amides is usually sprayed into the mould surface between moulding operations. With moulded rubber goods the amide additive may be added to the rubber mix before curing and assists in curing and may result in the improvement of mechanical properties.

The prime purpose of the release agents is to migrate to the mould surface to permit extended runs and rapid moulding operation. The release agents must not damage the mould surface. The release agent must provide the finished moulded resin product with an attractive usable surface finish. A common problem of using internal mould release agents is their build-up on the mould surface and moulded product. This build-up requires frequent mould cleaning to maintain a usable surface on the moulded resin product. This will slow down production and may result in products that do not pass surface inspection requirements.

It is therefore desirable to have an internal release agent that permits easy mould release, is compatible with polymers of the resins to be moulded, does not build up on mould surfaces and provides good surface characteristics to moulded product.

We have now found, for polymers of methyl methacrylate, that by incorporating into the polymer moulding materials prior to moulding an amide of the structure -X-CO-NH-Y where X and Y may be the same or different alkyl or alkenyl radicals, each radical containing from 9 to 30 carbon atoms and preferably alkyl or alkenyl radicals containing from 15 to 20 carbon atoms, improved mould release properties may be achieved.

Polymers of methyl methacrylate, especially those containing from about 0.5 to about 15 weight percent of copolymerized lower alkyl ester of acrylic acid or methacrylic acid, have been used for many years as the base polymer for attractive injection-moulded articles, having good clarity, reasonable toughness, and a high service temperature. The mouldable polymeric materials prepared from methyl methacrylate (MMA) will usually contain, for example, 100 to 85 weight methyl methacrylate %, 0 to 15 weight % ethyl acrylate (EA) or methyl acrylate and will usually have weight average molecular weight from about 50,000 to about 300,000, and most usually will be MMA/EA copolymer having a molecular weight between about 80,000 to about 170,000.

Preferably, the polymers are made in a continuous bulk process, in which a mixture of monomers of methyl methacrylate with smaller amounts of almost any methacrylate or acrylate is used along with organic peroxide initiators and mercaptan chain-transfer agent. The mixture is reacted and conducted to about 50% conversion, the polymer-monomer mixture pumped to a devolatizing extruder, preferably a twin-screw extruder, where residual monomer is removed and other additives, including the mould release agent, may be added. Styrene monomers may also be included in the monomer mixture if desired. Alternatively, the polymers and copolymers can be made by suspension polymerization, solution polymerization, emulsion polymerization or bulk cast polymerization methods. The mould release agent may be incorporated into the injection-moulding materials in any convenient way. Preferably the mould release agent is blended into the injection-moulding materials just before the pellet-forming step.

The polymer of methyl methacrylate, may be mixed with other thermoplastic and thermoset polymers such as amino resins, phenolic resins, polyphenylene ether resins or other moulding materials that can be reduced to particulate or relatively small granular form.

Poly(methyl methacrylate) moulding powders and pellets are available in numerous grades and sizes. These moulding powders are used by the plastic industry in extrusion - or injection moulding processes. The most common form of moulding powder is 3.2 mm pellets although fine beads and granulated powders are also sold.

The amide release agents used according to this invention have the formula X-CO-NH-Y wherein X and Y are the same or different and are C₉ to C₃₀ alkyl. More preferably X and Y are alkyl or alkenyl and contain 15 to 20 carbon atoms. The preferred release agent is a mixture of fatty acid amides containing a predominance of stearyl stearamide. The fatty acid amides are known compounds or may be prepared by known means from saturated and unsaturated fatty acids and mixtures thereof. Saturated fatty acids from which the alkyl radicals may be derived include capric, lauric, myristic, palmitic, stearic, arachidic, behenic, lignoceric and cerotic. Unsaturated fatty acids from which alkenyl radicals may be derived include palmitoleic, oleic, ricinoleic, petroselinic, vaccenic, linoleic, linolenic, eleostearic, punicic, licanic, parinaric, gadoleic, arachidonic, and 5-eiconsenic. Mixed fatty amides can also be prepared from oils such as palm oil and olive oil having a high percentages of C₁₆ to C₂₀ fatty acid content.

The amine source may be prepared by action of ammonia on a chlorohydroxy-, or sulfonic acid alkane or alkenyl compounds containing 10 to 30 carbon atoms.

The method described herein is useful in providing an improvement in injection moulding articles from injection mouldable polymeric materials derived from methyl methacrylate, preferably having an average molecular weight from about 50,000 to about 300,000, more preferably 80,000 - 170,000, by mixing into the polymeric materials a mould releasing effective amount of amide release agent as described above, injection moulding the mouldable polymeric material into the injection-moulded article, and removing the article from the mould. This method is particularly suited for manufacturing of video quality disks from polymeric materials containing polymethyl methacrylate polymers with molecular weight between 80,000 and 120,000.

Many of the fatty acid amide release agents are available from various sources as powders or flakes. They can withstand processing temperatures over 245° C. without excessive decomposition. The preferred release agent is a mixture of fatty acid amides, is commercially available and contains mostly amides of C₁₆ to C₁₈ acids. They are, usually noncorrosive and nonflammable.

By the term "acrylic moulding powder polymer" as used herein we mean polymer having from of 50% to 100%, by weight, methyl methacrylate units with the balance being substantially all acrylate or methacrylate, for example, esters of acrylic or methacrylic acid, having an average molecular weight of from 50,000 to 300,000, not containing polyunsaturated monomer units, having a glass temperature above about 25° C "Acrylic moulding powder" is intended to include powder, pellets, granules, and the like which are typically used to make moulded articles by heating the moulding powder in a mould or injecting melted acrylic moulding materials in to the mould.

When needed any number of different UV stabilizers may be included in the moulding powder/pellets. Ultraviolet stabilizers are colorless or nearly colorless organic substances that protect polymeric and other light-sensitive materials from degradation by sunlight and artificial sources of UV. Stabilizing mechanisms may be obtained by absorbing UV, trapping free radicals and quenching photoexcited chromophores. UV stabilizers include 2-hydroxybenzophenones, 2-(2'-hydroxyphenyl)benzotriazoles, and hindered amine light stabilizers (HALS). Another UV absorber for use in the moulding powder/pellets is methyl salicylate.

The acrylic moulding powder or mixtures of moulding powder/pellets can also include any of the known impact modifiers pigments, colorants, fillers, and the like. The impact modifier is usually crosslinked in at least one stage and incorporated into the acrylic matrix by blending.

The mould release agents can be used in quantities of from 0.05 weight percent to 1.5 weight percent based upon the weight of polymer moulding powder or pellets. Preferably from 0.1 weight percent to 0.5 weight percent of the mould release agent would be used.

The following Examples are given to illustrate details of the invention.

### EXAMPLES

### Example 1 - mould Release Using Amides

Polymethyl methacrylate with a melt flow rate (MFR) of about 3 gm/10 min., condition I, (where condition I refers to a melt temperature of 230° C. with an applied pressure of 3.8 kg) was prepared containing about 0.30 wt.% of a fatty amide, R₁ -CONH-R₂ mould release agent. The release agent was a fatty amide containing predominately alkyl radicals with 16 or 18 carbon atoms and was mixed with polymethyl methacrylate moulding powder having a weight average molecular weight of about 105,000 just before pelletizing. The polymeric material is then injection moulded using an optical lens disk mould. After 45 hours of continuous operation no mould deposit was detected. All parts released from the mould easily without evidence of sticking to the mould surface.

### Comparative Example 1 - mould Release Using Stearyl Alcohol

Polymethyl methacrylate with MFR of about 3 gm/10 min., condition I, containing about 0.30 wt.% stearyl alcohol as mould release agent was injection moulded using the same mould as in example 1. mould deposit in the form of plate-out (or'blush') was observed after only a few hours of moulding.

MFR(ASTM Standard D-128) is a measure of melt viscosity expressed as gm/10 min. The test is performed by placing pellets in a heated cylinder and applying a given pressure to the melt. A strand then extrudes out a hole in the bottom of the cylinder. Condition I refers to a certain temperature and a certain pressure. MFR's for acrylic moulding powder/pellets typically range from about 1 to about 30 gm/ 10 minutes.

### Example 2 - mould Release Using Amides

Polymethyl methacrylate with a MFR of about 20 gm/10 min., condition I, containing about 0.30 wt.% of a mould release agent is injection moulded using a mould/stamper to make high precision part like those used in laser disk applications. The polymethyl methacrylate had a molecular weight of about 93,000. The mould release agent used was a free-flowing white powder fatty amide containing alkyl radicals containing mostly 16 and 18 carbon atoms. It was mixed into the polymethyl methacrylate polymeric moulding material. After over 500 injections no mould deposit could be detected on the surface of the mould or associated parts of the mould. At no time during the moulding of these parts is there any evidence of sticking to the stamper, indicating the plastic material possessed excellent mould release characteristics.

### Comparative Example 2 - mould Release Using Stearyl Alcohol

Polymethyl methacrylate with an melt MFR of about 20 gm/10 min., condition I, containing about 0.25 wt.% stearyl alcohol as mould release agent was injection moulded using the same mould as in example 2. After 500 injections a light tan deposit was detected on the mould surface. This light tan deposit must be removed to prevent excessive rejection of parts.

Comparative examples 1 and 2 show that for a well known lubricant/mould release agent, stearyl alcohol, that after processing only 500 object there is an observable deposit on the mould surface, whereas with R₁-CO-NH-R₂ amides such as stearyl stearamide no mould deposit are detected under the same conditions. In examples 1 and 2 in which R₁ -CO-NH-R₂ amide was used as the release agent, parts released easily from the mould indicating that the polymeric injection moulding material possessed excellent mould release characteristics.

### Example 3 - mould Release Using Amides

Polymethyl methacrylate (molecular weight of about 93,000 with an MFR of about 20 gm/10 min., condition I, containing an R₁-CO-NH-R₂ amide as mould release agent at levels indicated in the table below is injection moulded using the same mould as used in Example 2.

At no time during the moulding of these parts is there any evidence of sticking to the mould/stamper, indicating that the plastic material possessed excellent mould release characteristics.

| Test | wt% of Release Agent |
|---|---|
| A | 0.09 |
| B | 0.23 |
| C | 0.36 |

## Claims

1. Use of an amide having a structural formula X-CO-NH-Y, wherein X and Y are the same or different and are alkyl or alkenyl radicals, each radical containing from 9 to 30 carbon atoms, as a mould release agent for a polymer of methyl methacrylate.

2. Use as claimed in claim 1, wherein X and Y are the same or different alkyl or alkenyl radicals containing from 15 to 20 carbon atoms.

3. Use as claimed in claims 1 or 2, wherein the amide is used in an amount of from 0.05 to 1.5 weight percent based on the total weight of the polymer.

4. Use as claimed in claims 1,2 or 3, wherein the amide is stearyl stearamide.

5. Use as claimed in any one of the preceding claims, wherein the polymer comprises pigment, toner, thermal stabilizer, anti-static agent or ultra-violet stabilizer.

6. Use as claimed in any one of the preceding claims, wherein X is an alkyl or alkenyl radical of 15 to 19 carbon atoms and Y is an alkenyl or alkenyl radical of 16 to 20 carbon atoms.

7. A polymer of methyl methacrylate comprising the amide defined in any one of the preceding claims as a mould release agent.

## Patentansprüche

1. Verwendung eines Amides mit einer Strukturformel X-CO-NH-Y, wobei X und Y gleich oder verschieden sind und Alkyl- oder Alkenylreste sind, von denen jeder 9 bis 30 Kohlenstoffatome enthält, als ein Formfreisetzungsmittel für ein Methylmethacrylat-Polymer.

2. Verwendung, wie im Anspruch 1 beansprucht, wobei X und Y gleiche oder verschiedene Alkyl- oder Alkenylreste mit 15 bis 20 Kohlenstoffatomen sind.

3. Verwendung, wie im Anspruch 1 oder 2 beansprucht, wobei das Amid in einer Menge von 0,05 bis 1,5 Gewichtsprozent, bezogen auf das Gesamtgewicht des Polymers, ist.

4. Verwendung, wie im Anspruch 1, 2 oder 3 beansprucht, wobei das Amid Stearylstearamid ist.

5. Verwendung, wie in einem der vorhergehenden Ansprüche beansprucht, wobei das Polymer ein Pigment, einen Toner, einen Wärmestabilisator, ein antistatisches Mittel oder einen Ultraviolettstabilisator umfaßt.

6. Verwendung, wie in einem der vorhergehenden Ansprüche beansprucht, wobei X ein Alkyl- oder ein Alkenylrest mit 15 bis 19 Kohlenstoffatomen ist und Y ein Alkenyl- oder ein Alkenylrest mit 16 bis 20 Kohlenstoffatomen ist.

7. Methylmethacrylat-Polymer, welches das in einem der vorhergehenden Ansprüche definierte Amid umfaßt, als ein Formfreisetzungsmittel.

## Revendications

1. Utilisation d'un amide ayant pour formule structurelle X-CO-NH-Y, dans laquelle X et Y sont identiques ou différents et sont des radicaux alkyle ou alcényle, chaque radical contenant 9 à 30 atomes de carbone, comme agent de démoulage pour un polymère de méthacrylate de méthyle.

2. Utilisation selon la revendication 1, dans laquelle X et Y sont des radicaux alkyle ou alcényle identiques ou différents contenant 15 à 20 atomes de carbone.

3. Utilisation selon la revendication 1 ou 2, dans laquelle l'amide est utilisé en quantité de 0,05 à 1,5 % en poids sur la base du poids total du polymère.

4. Utilisation selon la revendication 1, 2 ou 3, dans laquelle l'amide est le stéaramide de stéaryle.

5. Utilisation selon l'une quelconque des revendications précédentes, dans laquelle le polymère comprend un pigment, un toner, un stabilisant thermique, un agent antistatique ou un stabilisant ultraviolet.

6. Utilisation selon l'une quelconque des revendications précédentes, dans laquelle X est un radical alkyle ou alcényle de 15 à 19 atomes de carbone et Y est un radical alkyle ou alcényle de 16 à 20 atomes de carbone.

7. Polymère de méthacrylate de méthyle comprenant l'amide défini dans l'une quelconque des revendications précédentes comme agent de démoulage.
